# EUROPÄISCHE PATENTSCHRIFT

(11) **EP 3 586 991 B1**
(45) Veröffentlichungstag und Bekanntmachung des Hinweises auf die Patenterteilung: **14.10.2020**
(21) Anmeldenummer: 19177183.1
(22) Anmeldetag: 29.05.2019
(51) Int. Cl.: B21D 37/20, B23P 15/40, C21D 1/18, C21D 9/18, B26F 1/44, B26D 1/00

(54) **VERFAHREN ZUR HERSTELLUNG EINES BANDSTAHLMESSERS UND BANDSTAHLMESSER FÜR WERKZEUGE**
METHOD FOR PRODUCING A STEEL STRIP BLADE AND STEEL STRIP BLADE FOR TOOLS
PROCÉDÉ DE FABRICATION D'UNE LAME EN ACIER À FEUILLARD ET LAME EN ACIER À FEUILLARD POUR OUTILS

(30) Priorität: 29.06.2018 AT 505382018
(43) Veröffentlichungstag der Anmeldung: 01.01.2020
(73) Patentinhaber: voestalpine Precision Strip GmbH, 3333 Böhlerwerk (AT)
(72) Erfinder: Haas, Anton, 3321 Ardagger (AT); Kastner, Andreas, 3363 Ulmerfeld (AT)
(74) Vertreter: Wildhack & Jellinek

(56) Entgegenhaltungen:
- AT-B1- 508 551
- DE-U1-202007 013 402
- DE-U1-202009 009 301
- US-A- 3 581 604
- US-A1- 2005 155 478
- US-A1- 2014 013 915

## Beschreibung

Die vorliegende Erfindung betrifft ein Verfahren zur Herstellung eines Bandstahlmessers mit einer gehärteten Schneidkante, wobei proximal ein ein Zwischenstufengefüge und oberflächlich eine Entkohlung aufweisendes, im Querschnitt im Wesentlichen rechteckiges härtbares Stahlband einer spanabhebenden Bearbeitung mit der Bildung einer Längsschneidkante und nachfolgend einer Härtung des Werkstoffes im Schneidkantenbereich unterworfen wird.

Weiters bezieht sich die Erfindung auf ein Bandstahlmesser zur Herstellung eines Werkzeuges für eine Bearbeitung von flächigen Materialien.

Ein solches Verfahren und ein solches Bandstahlmesser sind aus der US 2014/013915 A1 bekannt.

Vorgenannte Bandstahlmesser werden für eine Fertigung von Werkzeugen für ein Schneiden und/oder Ritzen von flächigem Material verwendet.

Eine Werkzeugherstellung erfolgt im Wesentlichen durch ein Biegen des Bandstahlmessers in eine gewünschte Form und der Festlegung desselben in einem Messerträger.

Beim Biegen eines Bandstahlmessers quer zu dessen Längserstreckung treten naturgemäß an dessen Außenseite bis zur neutralen Faser Zugspannungen im Werkstoff auf, die zu Anrissen im Zuge einer Materialtrennung führen können.

Aus diesem Grund wird als Ausgangsmaterial für eine Herstellung von Bandstahlmessern ein im Wesentlichen rechteckiges Federstahlband mit einer Oberflächenentkohlung zur Erhöhung der Verformbarkeit dieser Schicht und mit einem proximalen Zwischenstufengefüge im Hinblick auf eine Härtung des Werkstoffes im Schneidkantenbereich verwendet.

Ein Ausgangsmaterial der vorgenannten Art wird in der Folge einer spanabhebenden Bearbeitung mit der Bildung einer Längsschneidkante unterworfen, welche Bearbeitung in der Regel durch Schaben erfolgt.

Zur Verbesserung der Schneidhaltigkeit des Bandstahlmessers bzw. zur Erhöhung der Lebensdauer des daraus gefertigten Werkzeuges für eine Bearbeitung von flächigem Material kann die Schneidkante bzw. der Schneidkantenbereich einer thermischen Vergütung des Werkstoffes bzw. einer Härtung desselben unterworfen werden.

Eine thermische Vergütung durch Härten und Anlassen bzw. durch Härten erfolgt dabei durch Erwärmen des Werkstoffes mit Erstellung einer austenitischen oder teilaustenitischen Gefügestruktur gefolgt von einer raschen Abkühlung.

In der Regel verwendete Herstellungstechnologien können eine ungünstige Verteilung der Werkstoffhärte im Schneidkantenbereich, eine verminderte Biegeeignung, eine unerwünschte Haftneigung der flächigen Werkstücke an der Schneidenfacette des Bandstahlmessers und dergleichen bewirken.

Die vorliegende Erfindung setzt sich zum Ziel, ein Verfahren zur Herstellung eines Bandstahlmessers der eingangs genannten Art anzugeben, welches Verfahren die Nachteile der bisherigen Fertigung überwindet und in einer Schrittfolge einer Erzeugung eine vorteilhafte Produktgüte wirtschaftlich erbringt.

Die weitere Aufgabe der Erfindung ist, eine Verbesserung der Güte der Bandstahlmesser und eine Steigerung der Lebensdauer derselben mit verwendungstechnischen Vorteilen in Werkzeugen aufzuzeigen.

Erfindungsgemäß wird dieses Ziel dadurch erreicht, dass herstellungstechnisch in einem ersten Schritt längsseitig eine spanabhebende Ausformung von Schneidenfacetten mit einer Schneidkante erfolgt, worauf in einem zweiten Schritt eine Härtung des Schneidkantenbereiches durchgeführt wird, welche Schneidenfacetten in der Folge in einem dritten Schritt zur Formgebung der Oberfläche zur Schneidkante hin eine spanabhebende Bearbeitung durch Feinbearbeitung mittels Glättens erfährt, wonach in einem vierten Schritt mindestens eine Folgehärtung durchgeführt wird und eine Härtesteigerung des Werkstoffes im distalen Schneidkantenbereich zur Schneidkante hin erfolgt.

Die mit der Erfindung erreichten Vorteile liegen im Wesentlichen in einer aufeinander abgestimmten Schrittfolge.

Eine spanabhebende Ausformung der Schneidenfacetten vom Federstahlband legt das proximal positionierte Zwischenstufengefüge frei, was zu einer vorteilhaften Härteannahme des Werkstoffes im Schneidkantenbereich bei einer thermischen Vergütung führt.

Ein Zwischenstufengefüge ist weitgehend nadelig gebildet und weist kleine, gegebenenfalls submikroskopische, Karbide auf, welche bei einer Austenitisierung mit hoher Geschwindigkeit gelöst werden und nach einer raschen Abkühlung ein feines Härtegefüge bewirken.

Die Schneidenfacetten haben insbesondere im Schneidkantenbereich von deren Herstellung durchwegs ein nachteiliges Rauigkeitsmaß der Oberfläche, welche Rauheit zu einem ungünstigen Haften des flächigen Materials bei einer Bearbeitung bzw. Schnitterstellung führt. Um diesen Nachteil zu beheben, ist erfindungsgemäß vorgesehen, nach einer Härtung in einem dritten Schritt eine Formgebung durch Feinbearbeitung durch Glätten der Oberfläche des Schneidkantenbereiches zur Schneidkante hin vorzunehmen und ein Rauigkeitsmaß einzustellen, welches Maß ein Minimum an Haftneigung des Schnittgutes bzw. des flächigen Materials am Bandstahlmesser bewirkt.

Eine Feinbearbeitung der Oberfläche der Schneidenfacetten, mit entsprechender Wirtschaftlichkeit kann durch eine dabei entstehende Wärme zu einem Anlassen des Härtegefüges mit einem ungünstigen Abfall der Materialhärte zur Schneidkante hin führen. Nach der Erfindung wird in einem nachfolgenden vierten Schritt mindestens eine Folgehärtung durchgeführt, welche eine Härtesteigerung des Werkstoffes zur Schneidkante hin bewirkt.

In den Unteransprüchen sind nach der Erfindung einzustellende bevorzugte Bereiche einer jeweiligen Werkstoffhärte, die geometrische Form der Schneidkante und die Rauheit der Oberfläche genannt.

Gemäß der Erfindung wird die weitere Aufgabe dadurch gelöst, dass das Bandstahlmesser im Querschnitt proximal ein Zwischenstufengefüge hat, die Schneidenfacetten zur Schneidkante, mit einem Radius von max. 2,5 µm, hin durch Feinbearbeitung geglättete Oberflächen aufweisen und die Härte des Werkstoffes im distalen Schneidkantenbereich bis zu einer Tiefe von 0,05 bis 0,15 mm in den Facettenbereich hinein mindestens 650 HV beträgt und in proximaler Richtung verringert ist.

Insbesondere für eine Bearbeitung von Kunststoffflächenmaterialien sind, wie gefunden wurde, Werkzeugschneiden mit geringen Kantenradien vorteilhaft.

Eine hohe Härte des Werkzeugwerkstoffes im Kantenbereich verlängert in günstiger Weise die Schneidhaltigkeit im erschwerten Einsatz und kann bei einem Zurichten der Bandstahlmesser im Werkzeug (AT 508 551 B1) Vorteile bewirken.

Ein Bandstahlmesser zur Herstellung eines Werkzeuges nach der Erfindung ist in den Patentansprüchen 5 bis 7 gekennzeichnet.

Anhand des in der Zeichnung dargestellten Beispiels und von Werkstoffuntersuchungen eines Bandstahlmessers wird die Erfindung näher erläutert.

Es zeigen:
Fig. 1 einen prinzipiellen Aufbau und eine Anordnung von Bereichen eines erfindungsgemäßen Bandstahlmessers im Querschnitt.
Fig. 2 eine metallographische Gefügedarstellung eines Bandstahlmessers gemäß der Erfindung.
Fig. 3 ein Detail von Fig. 2 im Facettenbereich

Zur leichteren Zuordnung der Bereiche eines Bandstahlmessers nach der Erfindung soll die nachfolgende Bezugszeichenliste dienen.
- 1: Stahlband
- 2: Schneidkante
- 3,3': Schneidenfacetten
- 4,4': Randendkohlung
- 5,5': Weitere(r) Facettenteil(e)
- 6: Schneidkantenbereich gehärtet
- 7: Schneidkantenbereich mit Folgehärtung(en)
- 8: Oberflächenschicht im Schneidenbereich

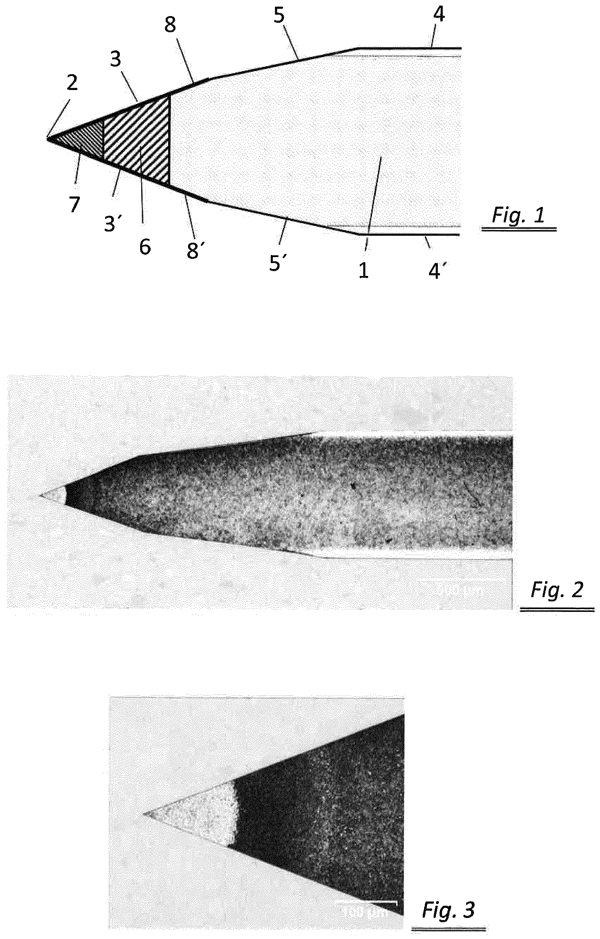

Fig. 1 zeigt schematisch ein Bandstahlmesser im Querschnitt, gebildet aus einem Stahlband 1 mit einer Randendkohlung 4,4' und an der Schmalseite des Stahlbandes positionierten Schneidenfacetten 3,3' zur Schneidkante 2 hin mit jeweils einer weiteren Facette 5,5'.

Wenn auch eine derartige Querschnittsform eines Bandstahlmessers mit einer Schneide 2 und mindestens einer Facette 3,3' mit unterschiedlichen spanabhebenden Bearbeitungen herstellbar ist, wird in vielen Fällen eine Formgebung durch Schaben eines Stahlbandes 1 und ein Härten mit Induktionserwärmung des Bereiches der Schneidkante 2 durchgeführt.

Eine Spanabnahme weist jedoch allenfalls Bearbeitungsriefen im Werkstück bzw. eine Rauheit der Oberfläche der Schneidenfacetten 3,3' des Bandstahlmessers auf, welche bei einem Schnitt eines flächigen Materials durchwegs ungünstige Haftneigungen zwischen Werkzeug und Werkstück bewirken. Es wurde schon versucht, mittels Polieren oder Feinschleifens die Oberfläche der Schneidenfacetten 3,3" zu glätten, um diesen Nachteil zu überwinden.

Entgegen der Fachmeinung wurde jedoch gefunden, dass für eine vorteilhafte Ablösung des flächigen Materials von der Oberfläche der Schneidenfacetten des Bandstahlmessers sowohl ein Maximalwert als auch ein Mindestmaß einer Rauheit vorzugsweise Grenzwerte darstellen. Demnach sind die Werte für Ra zwischen 0,005 bis 0,12 µm und Rz zwischen 0,05 bis 1,2 µm durch eine Feinbearbeitung mittels Glättens einzustellen (Rauheitskenngrößen nach ÖNORM EN ISO 4287)).

Eine gezielte Feinbearbeitung mit hoher Leistung an den Schneidenfacetten 3,3' im Bereich zur Schneidkante 2 hin kann jedoch einen Abfall der Werkstoffhärte in diesem Bereich mit sich bringen.
Gemäß der Erfindung ist im distalen Schneidkantenbereich 7 mittels einer Folgehärtung oder mittels Folgehärtungen die Werkstoffhärte auf über 650 HV an der Schneidkante 2 proximal bis zu einer Tiefe von 0,15 mm einzustellen, wodurch eine hohe Schneidhaltigkeit des Bandstahlmessers erreicht wird.

Fig. 2 zeigt ein Bandstahlmesser gemäß der Erfindung im Querschnitt nach einer Ätzbehandlung zur Gefügedarstellung.
Ein Stahlband 1 mit einem Zwischenstufengefüge und einer Randentkohlung an der Oberfläche (hell angeätzt) weist jeweils mehrteilige Facetten mit einer Schneidkante auf.
Ein Schneidkantenbereich 6 zeigt ein Vergütungsgefüge, welches von der Schneidkante 2 bis etwa 300 µm in die Schneidenfacette reicht.
Von der Schneidkante bis etwa 145 µm in den Schneidkantenbereich ist das Vergütungsgefüge durch eine Folgehärtung als feinstrukturiertes Härtegefüge, welches hell angeätzt ist, ausgeformt

Fig. 3 zeigt die Schneidenfacette von Fig. 2 in Vergrößerung.

## Patentansprüche

1. Verfahren zur Herstellung eines Bandstahlmessers mit einer gehärteten Schneidkante (2), wobei ein, proximal, ein Zwischenstufengefüge und oberflächlich eine Entkohlung (4,4') aufweisendes, im Querschnitt im Wesentlichen rechteckiges Stahlband (1) einer spanabhebenden Bearbeitung mit Bildung einer LängsSchneidkante (2) und nachfolgend einer Härtung des Werkstoffes im Schneidkantenbereich (6,7) unterworfen wird, **dadurch gekennzeichnet, dass** in einem ersten Schritt längsseitig eine spanabhebende Ausformung der Schneidenfacetten (3,3';5,5') mit einer Bildung einer Schneidkante (2) erfolgt, worauf in einem zweiten Schritt eine Härtung des Schneidkantenbereiches (6;7) durchgeführt wird, welche Schneidenfacetten (3,3') in der Folge in einem dritten Schritt zur Formgebung der Oberfläche zur Schneidkante (2) hin eine spanabhebende Bearbeitung durch Feinbearbeitung mittels Glättens erfährt, wonach in einem vierten Schritt mindestens eine Folgehärtung im Schneidkantenbereich (6,7) durchgeführt wird und eine Härtesteigerung des Werkstoffes im distalen Schneidkantenbereich (7) zur Schneidkante (2) hin erfolgt.

2. Verfahren nach Anspruch 1, **dadurch gekennzeichnet, dass** eine Ausformung der Schneidenfacetten (3,3';5;5') gemäß dem ersten Schritt durch Schaben erfolgt und im zweiten Schritt eine induktive Härtung des Schneidkantenbereiches (6,7) auf einen Wert von 550 bis 700 HV durchgeführt wird.

3. Verfahren nach Anspruch 1 und Anspruch 2, **dadurch gekennzeichnet, dass** die Oberflächen der Schneidkantenbereiche (6,7), hergestellt gemäß den Schritten 1 und 2, durch Feinbearbeitung geglättet mit einer Rauheit Ra von 0,005 bis 0,12 µm und Rz von 0,05 bis 1,2 µm nach ÖNORM EN ISO 4287 gebildet und einen Kantenradius der dabei erstellten Schneide (2) mit S ≤ 2.5 µm ausgeformt wird..

4. Verfahren nach den Ansprüchen 1 bis 3, **dadurch gekennzeichnet, dass** basierend auf der geometrischen Ausbildung und der örtlichen Energieeinbringung in die geglättete Fläche (8,8') im Facettenbereich (3,3';5,5') die Parameter der Folgehärtung(en) ermittelt und eine Werkstoffhärte von über 650 HV von der Schneidkante (2) proximal bis zu einer Tiefe von 0,05 bis 0,15 mm in den Facettenbereich (7,6) hinein erstellt werden.

5. Bandstahlmesser zur Herstellung eines Werkzeuges, insbesondere eines Werkzeuges zur Bearbeitung von flächigen Materialien wie Karton, Wellpappe, Kunststofffolien und dergleichen, gefertigt mit zumindest einer längsseitigen, durch spanabhebende Ausformung erstellten Schneidenfacette mit einer gehärteten Schneidkante (2), **dadurch gekennzeichnet, dass** das Bandstahlmesser (1) im Querschnitt proximal ein Zwischenstufengefüge hat, die Schneidenfacetten (3,3';5,5') zur Schneidkante (2), mit einem Radius von max. 2,5 µm, hin durch Feinbearbeitung geglättete Oberflächen (3,3') aufweisen und die Härte des Werkstoffes im distalen Schneidkantenbereich (7) bis zu einer Tiefe von 0,05 bis 0,15 mm in den Facettenbereich hinein mindestens 650 HV beträgt und in proximaler Richtung verringert ist.

6. Bandstahlmesser nach Anspruch 5, **dadurch gekennzeichnet, dass** die Oberflächen (3,3') der mittels einer Feinbearbeitung spanabhebend bearbeiteten bzw. geglätteten Schneidenfacetten (3,3';5,5') eine Rauheit Ra von 0,005 bis 0,12 µm und Rz von 0,05 bis 1,2 µm nach ÖNORM EN ISO 4287 aufweisen.

7. Bandstahlmesser nach Anspruch 5 oder 6, **dadurch gekennzeichnet, dass** die Oberflächen der geglätteten Schneidenbereiche (7,6) zumindest im distalen Schneidkantenbereich (7) eine bei einer oder noch einer Folgehärtung gebildete Oberflächenschicht (8,8') und zwar eine Oxidhaut und/oder eine Gleitschicht oder Hartstoffschicht trägt.

## Claims

1. Method for producing a strip steel knife with a hardened cutting edge (2), wherein a steel strip (1) which has, proximally, an intermediate stage structure and, on the surface, a decarburisation (4, 4'), and which is substantially rectangular in cross-section, is subjected to a metal-cutting machining to form a longitudinal cutting edge (2), and subsequently a hardening of the material in the cutting edge region (6, 7), **characterised in that,** in a first step, a metal-cutting shaping of the blade bevels (3, 3'; 5, 5') to form a cutting edge (2) takes place on the longitudinal side, whereupon, in a second step, a hardening of the cutting edge region (6; 7) is carried out, which blade bevels (3, 3') subsequently, in a third step for shaping the surface towards the cutting edge (2), undergoes a metal-cutting machining by fine machining by means of smoothing, after which, in a fourth step, at least one subsequent hardening in the cutting edge region (6, 7) is carried out and an increase in hardness of the material in the distal cutting edge region (7) towards the cutting edge (2) takes place.

2. Method according to claim 1, **characterised in that** a shaping of the blade bevels (3, 3'; 5, 5') according to the first step is effected by shaving, and in the second step an inductive hardening of the cutting edge region (6, 7) to a value of 550 to 700 HV is carried out.

3. Method according to claim 1 and claim 2, **characterised in that** the surfaces of the cutting edge regions (6, 7), produced according to steps 1 and 2, is shaped so as to be smoothed by fine machining with a roughness Ra of 0.005 to 0.12 µm and Rz of 0.05 to 1.2 µm in accordance with ONORM EN ISO 4287, and an edge radius of the blade (2) thus created with S ≤ 2.5 µm.

4. Method according to claims 1 to 3, **characterised in that** the parameters of the subsequent hardening(s) are determined based on the geometric formation and the local energy input into the smoothed surface (8, 8') in the bevel region (3, 3'; 5, 5') and a material hardness of over 650 HV of the cutting edge (2) proximally up to a depth of 0.05 to 0.15 mm into the blade region (7, 6) are created.

5. Strip steel knife for producing a tool, in particular a tool for machining planar materials such as cardboard, corrugated cardboard, plastic films and the like, manufactured with at least one longitudinal-side blade bevel which is created by metal-cutting shaping and has a hardened cutting edge (2), **characterised in that** the strip steel knife (1) has, in cross-section, proximally an intermediate stage structure, the blade bevels (3, 3'; 5, 5') have surfaces (3, 3') which are smoothed towards the cutting edge (2), with a radius of max. 2.5 µm, by fine machining and the hardness of the material in the distal cutting edge region (7) is at least 650 HV up to a depth of 0.05 to 0.15 mm into the bevel region and is reduced in the proximal direction.

6. Strip steel knife according to claim 5, **characterised in that** the surfaces (3, 3') of the blade bevels (3, 3'; 5, 5') which have been machined by metal-cutting or smoothed by means of fine machining have a roughness Ra of 0.005 to 0.12 µm and Rz of 0.05 to 1.2 µm in accordance with ONORM EN ISO 4287.

7. Strip steel knife according to claim 5 or 6, **characterised in that** the surfaces of the smoothed cutting edge regions (7, 6) bears, at least in the distal cutting edge region (7), a surface layer (8, 8'), namely an oxide layer and/or a sliding layer or hard material layer, formed during a, or another, subsequent hardening.

## Revendications

1. Procédé de production d'un couteau en feuillard d'acier muni d'un bord tranchant (2) trempé, dans lequel une bande d'acier (1) essentiellement rectangulaire vue en coupe transversale et présentant de manière proximale une bainite et de manière superficielle une décarburation (4, 4') est soumise à un usinage par enlèvement de copeaux avec formation d'un bord tranchant longitudinal (2) et ensuite à une trempe du matériau dans la région de bord tranchant (6, 7), **caractérisé en ce que**, dans une première étape, un formage des biseaux de coupe (3, 3' ; 5, 5') par enlèvement de copeaux a lieu du côté longitudinal avec formation d'un bord tranchant (2) et, dans une deuxième étape, une trempe de la région tranchante (6 ; 7) est mise en œuvre, lesdits biseaux de coupe (3, 3') subissant ensuite, lors d'une troisième étape destinée au façonnage de la surface afin de fournir un bord tranchant (2), un usinage par enlèvement de copeaux grâce à une finition au moyen d'un lissage, après quoi, dans une quatrième étape, au moins une trempe ultérieure est mise en œuvre dans la région de bord tranchant (6, 7) et une augmentation de dureté du matériau a lieu dans la région de bord tranchant (7) distale vers le bord tranchant (2).

2. Procédé selon la revendication 1, **caractérisé en ce qu'**un formage des biseaux de coupe (3, 3' ; 5, 5') dans le cadre de la première étape a lieu par grattage, et une trempe par induction de la région de bord tranchant (6, 7) à une valeur comprise entre 550 et 700 HV est mise en œuvre dans la deuxième étape.

3. Procédé selon la revendication 1 et la revendication 2, **caractérisé en ce que** les surfaces des régions de bord tranchant (6, 7) produites dans le cadre des étapes 1 et 2 sont lissées avec une rugosité Ra comprise entre 0,005 et 0,12 µm et une rugosité Rz comprise entre 0,05 et 1,2 µm selon la norme ÖNORM EN ISO 4287 grâce à une finition, et un rayon d'arête du bord tranchant (2) ainsi créé est formé de manière à respecter S ≤ 2,5 µm.

4. Procédé selon les revendications 1 à 3, **caractérisé en ce que** les paramètres de la ou des trempe(s) ultérieure(s) sont déterminés en se basant sur la conception géométrique et l'apport d'énergie local dans les surfaces lissées (8, 8') de la région biseautée (3, 3' ; 5, 5') et une dureté de matériau supérieure à 650 HV du tranchant (2) est créée dans la région biseautée (7, 6) et de manière proximale jusqu'à une profondeur comprise entre 0,05 et 0,15 mm.

5. Couteau en feuillard d'acier destiné à la production d'un outil, en particulier d'un outil destiné à l'usinage de matériaux plats tels que du carton, du carton ondulé, des films plastiques et similaires, fabriqué avec au moins un biseau de coupe créé du côté longitudinal par formage par enlèvement de copeaux et muni d'un bord tranchant (2) trempé, **caractérisé en ce que** le couteau en feuillard d'acier (1) vu en coupe transversale présente de manière proximale une bainite, les biseaux de coupe (3, 3' ; 5, 5') présentent, vers le bord tranchant (2) et en respectant un rayon d'au plus 2,5 µm, des surfaces (3, 3') lissées grâce à une finition, et la dureté du matériau dans la région de bord tranchant (7) distale est d'au moins 650 HV jusqu'à une profondeur comprise entre 0,05 et 0,15 mm dans la région biseautée et est réduite dans la direction proximale.

6. Couteau en feuillard d'acier selon la revendication 5, **caractérisé en ce que** les surfaces (3, 3') des biseaux de coupe (3, 3' ; 5, 5') lissées ou usinées par enlèvement de copeaux au moyen d'une finition présentent une rugosité Ra comprise entre 0,005 et 0,12 µm et une rugosité Rz comprise entre 0,05 et 1,2 µm selon la norme ÖNORM EN ISO 4287.

7. Couteau en feuillard d'acier selon la revendication 5 ou 6, **caractérisé en ce que** les surfaces des régions de bord (7, 6) lissées supporte, au moins dans la région de bord tranchant (7) distale, une couche de surface (8, 8') formée lors d'une ou plusieurs trempe(s) ultérieure(s), à savoir une peau d'oxyde et/ou une couche de glissement ou une couche de matériau à résistance mécanique élevée.
